# EUROPEAN PATENT APPLICATION

(11) **EP 1 241 668 A2**
(43) Date of publication of application: **18.09.2002**
(21) Application number: 02005387.2
(22) Date of filing: 15.03.2002
(51) Int. Cl.: G11B 20/10, G11B 27/034, H04N 5/92, H04N 9/804

(54) **Method and apparatus for image recording and reproduction for plurality of media**

(30) Priority: 16.03.2001 JP 2001076846
(71) Applicant: Kabushiki Kaisha Toshiba, Tokyo 105-8001 (JP)
(72) Inventor: Kamio, Hiroyuki, Toshiba K. K., Intell. Prop. Div., Tokyo 105-8001 (JP)
(74) Representative: HOFFMANN - EITLE

(57) **Abstract**

When the recording capacity of a DVD-RAM 1001 is running short, recording onto a hard disk is started. In this case, overlap period recording (A7, A8) information is recorded onto both of the DVD-RAM and the hard disk as information for a concatenating part. In playback management information for each of the DVD-RAM and the hard disk, entry point information is recorded so that the overlap period recording (A9 - A11) information can be skipped.

## Description

This invention relates to a method and apparatus for recording and reproducing images onto and from a plurality of recording media. An information recording and reproducing apparatus to which the present invention is applied includes, for example, a fixed hard disk built into an apparatus and a removable device which can be installed/removed from the apparatus and is capable of dealing with media such as DVD (digital versatile disk).

In recent years, a DVD standard which enables long movies or moving pictures to be recorded onto an optical disk has been proposed.

The DVD standard supports the MPEG (Moving Pictures Expert Group) 2 scheme as a moving picture processing scheme. The standard also supports the AC-3 audio compression scheme, MPEG audio compression scheme, and linear PCM scheme as an audio signal processing scheme. In signal processing, the standard can handle sub-picture data for the subtitles of movies, karaoke, or the like. The sub-picture data is obtained by run-length-encoding the bit map data.

Furthermore, in the standard, control data (navigation pack) is added to management information to enable special reproduction, such as fast-forwarding or reversing. In addition, IS 09660 and micro UDF standards are supported, to enable the data to be read by computer.

As for the standards of the media, not only DVD-ROMs, DVD video, but also DVD-RAM (having a recording capacity of about 4.7 GB) have been completed. DVD-RAM drives have begun to be popularized as computer peripherals.

Furthermore, a DVD video standard which realizes a system capable of recording and reproducing information in real time by using DVD-RAMs, that is, the RTR (Real-Time Recording) DVD standard, has been completed. This standard is based on the DVD-video standard currently on the market. Moreover, file systems compatible with RTR-DVD have been standardized.

On the other hand, a method of recording and reproducing broadcast signals by using an apparatus with a built-in hard disk drive (HDD) have been considered. A hard disk drive can record more than 100 gigabytes of data.

With the advances in image compression technology, recording and reproducing units making use of DVDs, hard disks, semiconductor memory devices, and the like as information recording media for recording broadcast signals in real time have been developed.

The following use forms and functions can be considered for the above-described apparatuses. A program signal (or a reproduction signal from another medium) is inputted to a recording and reproducing unit. The recording and reproducing unit converts the program signal into a specific format and records the resultant signal on a recording medium (DVD-RAM). Such a recording process is carried out in a program reserved time. When the remaining capacity of the DVD-RAM is running short, the function of automatically recording information on the hard disk is started. To achieve such concatenation recording, the function of recording the same information as part of the information recorded in the last few minutes on the DVD-RAM onto the hard disk as well (hereinafter, referred to as the overlap period recording function) operates.

Overlap period recording enables the part to be reproduced again, when the reproducing media is changed over. For instance, when the development of the story is important as in a detective program, when changing reproducing media, the overlap period has the effect of reminding the viewer of the story.

However, the time required for the information in the overlap period to be reproduced is redundant. Thus, there have been demands for a quick playback of the subsequent scenes.

In an aspect of the present invention, it is an object to provide an apparatus for recording and reproducing pictures onto and from a plurality of recording media, and is capable of starting to record the information onto a second recording medium, when the remaining capacity of a first recording medium is running short, in the course of recording the information onto the first recording medium, and thereby recording the information in such a manner that some of the information overlaps.

In this aspect of the invention, it is particularly an object to provide an apparatus for recording and reproducing pictures onto and from a plurality of recording media which newly provides management information for the overlap period recording information and enables the user to reproduce or skip the overlap period recording information arbitrarily.

To accomplish the above objects, the aspect of the invention is comprised in that, when recording is changed over from the first recording medium to the second recording medium, the same information is recorded in both mediums as an overlap, and skip information, for skipping over the overlap, is recorded at least on the second recording medium, as playback management information.

As a result, when reproduction is desired, and the second recording medium is accessed at the time of changeover between mediums, the user can skip over the overlap if he/she does not want to see it.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram of a first embodiment of an information recording and reproducing apparatus to which the present invention is applied;
FIG. 2 is a diagram to help explain video object management information and management and data units in the DVD standard;
FIG. 3 is a diagram to help explain management information, an important part of the present invention;
FIG. 4 is a flowchart to help explain a recording operation in the apparatus of the present invention;
FIG. 5 is a time chart to help explain the relationship between an overlap period set by the apparatus of the invention and entry point information; and
FIG. 6 is a flowchart to help explain a reproducing operation in the apparatus of the present invention.

Hereinafter, referring to the accompanying drawings, an embodiment of the present invention will be explained.

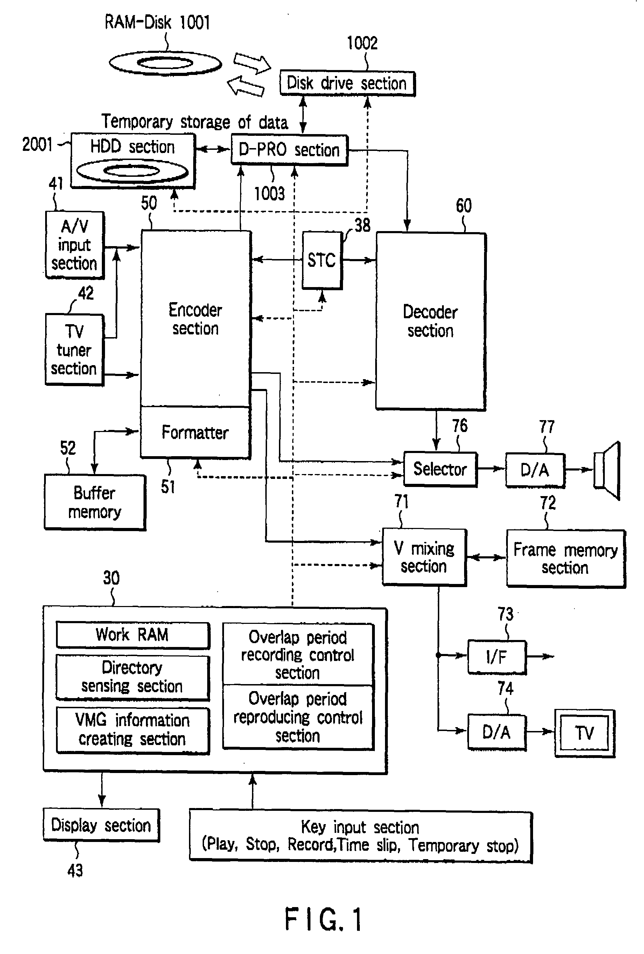

FIG. 1 shows an embodiment of a recording and reproducing apparatus to which the present invention is applied. The recording and reproducing apparatus can use both a DVD-RAM and a hard disk as a recording medium. The hard disk or DVD-RAM may be replaced with a semiconductor memory.

In FIG. 1, the main blocks on the left refer to the recording section and the blocks on the right refer to the reproducing section.

The information recording and reproducing apparatus comprises a disk drive section 1002, a hard disk drive section 2001, and a data processor section 1003. An optical disk 1001 acting as a first medium is an information recording medium which enables a video file to be constructed. The disk drive section 1002 rotates the optical disk 1001, thereby reading and writing information. The hard disk drive section 2001 drives a hard disk acting as a second medium. The disk drive section 1002 includes a rotation control system for the optical disk 1001, a laser driving system, and an optical system.

The data processor section 1003 can supply the recording data to the disk drive section 1002 and hard disk drive section 2001 and receive the reproduced signal. The data processor section 1003, which handles the data in recording units or reproducing units, includes a buffer circuit, a modulation/demodulation circuit, and an error correction circuit.

The recording and reproducing apparatus is mainly composed of an encoder section 50 constituting the recording side, a decoder section 60 constituting the reproducing side, and a microcomputer block 30 that controls the operation of the body of the apparatus.

The encoder section 50 includes a video and an audio analog/digital converter that convert the inputted analog video and audio signals into digital, a video encoder, and an audio encoder. It also includes a sub-picture encoder.

A formatter 51 to which a memory buffer 52 is connected converts the data from the encoder section 50 into the relevant DVD-RAM format and outputs it to the data processor section 1003.

External analog audio video signals from an AV input section 41 or a TV (television) tuner 42 are inputted to the encoder section 50.

When compressed digital audio video signals are inputted directly to the encoder section 50, they can be supplied directly to the formatter 51. The encoder section 50 can also supply the analog-digital converted digital video signal and digital audio signal directly to a video mixing section 71 and an audio selector 76, respectively.

The video encoder compresses the digital video signal at a variable bit rate, according to the MPEG-2 or MPEG-1 standards. The digital audio signal is either compressed at a fixed bit rate or converted to a linear PCM digital audio signal, according to the MPEG or AC-3 standards.

If sub-picture information, either from a DVD player (with an independent sub-picture signal output terminal) or the TV tuner 42 (from a broadcast DVD signal) is input, a sub-picture encoder encodes (or run-length encodes) the sub-picture signal in the video signal, thereby producing a sub-picture bit map.

The formatter 51 packs the encoded digital video signals, digital audio signal, and sub-picture data into video packs, audio packs, and sub-picture packs. These packs are gathered and converted into data format determined by the DVD-recording standard (e.g., DVD-RAM, DVD-R, or DVD-RW).

The apparatus can supply the information (including the video packs, audio packs, and sub-picture data packs) formatted at the formatter 51 and the created management information via the data processor section 1003 to the hard disk drive section 2001 (or disk drive section 1002) and record them onto the hard disk (or optical disk 1001). The apparatus can also record the information recorded on the hard disk (or the optical disk 1001) onto the optical disk 1001 (or the hard disk) via the data processor section 1003 and disk drive section 1002. This is because the format of the data recorded on the hard disk is the same as that of the data recorded on the optical disk 1001.

Use of the same data format on the hard disk and optical disk enables the following editing processes: the process of eliminating part of the video objects of a plurality of programs recorded on the hard disk or the optical disk 1001 and the process of concatenating objects of different programs. This is because the data unit (explained later) dealt with by the format related to the invention is defined, which makes editing easier.

The microcomputer block 30 includes a MPU (micro processing unit) or CPU (central processing unit), a ROM in which a control program and others have been written, and a RAM for providing a work area necessary to execute a program.

The MPU of the microcomputer block 30 uses the RAM as a work area according to the control program stored in the ROM and carries out the following operations: sensing a fault place, sensing an unrecorded area, setting a video information recording place, recording the UDF, and setting an AV address.

Furthermore, the microcomputer block 30, which has an information processing section necessary to control the other blocks in the system, comprises a work RAM, a directory sensing section, a VMG (entire video management information) information creating section, a copy-related information sensing section, a copy and scrambling information processing section (RDI processing section), a packet header processing section, a sequence header processing section, and an aspect ratio information processing section. In the apparatus, the microcomputer block 30 further comprises an overlap period recording control section and an overlap period reproducing control section.

Of the results of the execution of the MPU, the contents that the user should be informed of are displayed on the display section 43 of a DVD video recorder or on the OSD (on-screen display) of a monitor. Furthermore, the microcomputer block 30 has a key input section 44 that produces an operation signal to operate the apparatus. The operation signal may be given by a remote control function (not shown).

The timing with which the microcomputer block 30 controls the disk drive section 1002, data processor section 1003, encoder section 50 and/or decoder section 60, and others is set on the basis of the time data from a system time clock (STC) 38. Recording and reproduction are normally done in synchronization with the time clock from the STC 38. The other processes may be executed at a timing independent of the STC 38.

The decoder section 60 includes a separator for separating each pack from a DVD-format signal with a pack structure, a memory used for separating packs and executing other signal processes, a V decoder for decoding the main video data (the contents of a video pack) separated by the separator, an SP decoder for decoding the sub-picture data (the contents of a sub-picture pack) separated by the separator, and an A decoder for decoding the audio data (the contents of an audio pack) separated by the separator. The decoder section 60 further includes a video processor which combines the decoded main video data with the decoded sub-picture data as needed and outputs the main picture in such a manner that menus, highlight buttons, subtitles, and other sub-pictures are superposed on the main picture.

The output video signal of the decoder section 60 is inputted to a video mixing section 71. The video mixing section 71 combines text data. Lines for taking in the signals directly from the TV tuner 41 and A/v input section 42 are connected to the video mixing section 71. A frame memory 72 used as a buffer is also connected to the video mixing section 71. When the output terminal of the apparatus is for digital output, the output of the video mixing section 71 is outputted to the outside world via an interface (I/F) 73. When the output terminal of the apparatus is for analog output, the output of the video mixing section 71 is outputted to the exterior via a digital-analog converter 74. The operating state of the video mixing section 71 is controlled by a control signal from the microcomputer block 30.

The output audio signal of the decoder section 60 is supplied via a selector 76 to a digital-analog converter 77, which converts the output audio signal into an analog signal and outputs the resultant signal to the exterior. The selector 76 is controlled by the select signal from the microcomputer block 30. Under the control of the select signal, the selector 76 can select directly the signal passed through the encoder section 50, when directly monitoring the digital signals from the TV tuner 42 and A/V input section 41.

The formatter of the encoder section 50 creates segment information in data units corresponding to the format during recording and sends the created information (e.g., information about GOP head interruption) to the MPU of the microcomputer block 30 periodically. The segment information includes the number of packs in a video object unit (VOBU), the end address of an I picture from the head of the VOBU, and the playback time of the VOBU.

At the same time, the information from the aspect ratio information processing section is sent to the MPU, when recording is started. Then, the MPU creates video object (VOB) stream information (STI). The STI includes resolution data and aspect data. At the time of reproduction, each decoder section effects initial setting on the basis of the STI.

In a recording and reproducing DVD, the number of video files is set to one. To continue reproduction without a break in accessing (or seeking) the data, the shortest continuous information unit (size) is determined. This unit is called CDA (contiguous data area). The CDA size is a multiple of the size of an ECC (error correction code) block (containing 16 sectors). In the file system, data is recorded in CDA units.

The data processor section 1003 receives the data in VOBU units from the formatter of the encoder section 50 and supplies the data in CAD units to the disk drive section 1002. The MPU of the microcomputer block 30 creates the management information necessary to reproduce the recorded data and, when recognizing the data recording end command, sends the created management information to the data processing section 1003. Then, the data processing section 1003 records the management information on the disk. Therefore, when encoding is in progress, the MPU of the microcomputer block 30 receives the information in data units (such as segment information) from the encoder section 50. When recording is started, the MPU of the microcomputer block 30 recognizes the management information (file system) read from the optical disk and hard disk and then an unrecorded area on each disk and sets a data recording area on the disks via the data processor section 1003.

Here, the relationship between the management information for a real-time DVD and a video object, contents, will be explained in brief.

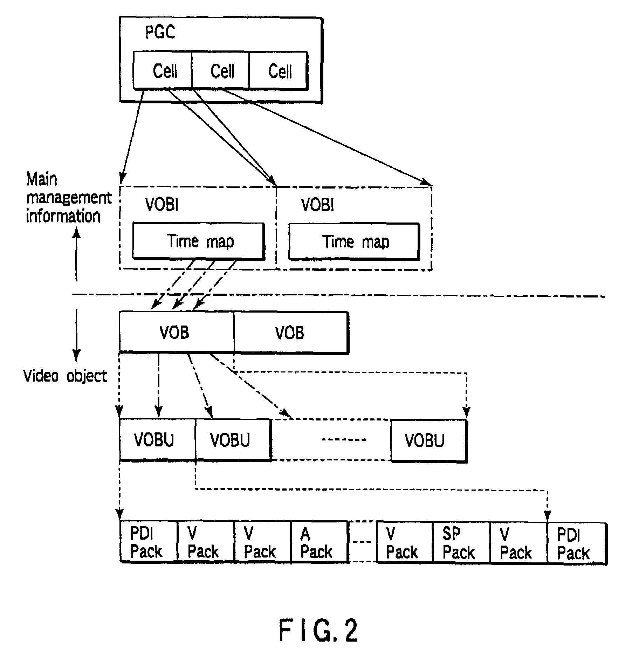

In FIG. 2, a video object (VOB) will be explained. A VOB is called a VR MOVIE.VRO file in a directory. A video file has a hierarchic structure. One video file is composed of one or more VOBs (video objects). One VOB is composed of one or more VOBUs (video object units). One VOBU is composed of a plurality of packs. The packs include RDI packs, V (video) packs, and A (audio) packs. They may include sub-picture packs (SP packs).

An RDI pack is called a unit control information pack, a navigation information pack, or a real-time data information pack (RDI_PCK). The pack includes information representing the start time for reproducing the first field of the VOBU to which the pack belongs, information representing the recording time of the VOBU, and manufacturer information (MNF I). It also includes display control information (DCI) and copy control information (CCI). The display control information (DCI) includes aspect ratio information, subtitle mode information, and film camera mode information. The copy control information (CCI) includes copy permit information (0,0) or copy inhibit (copy unpermitted) information (1,1).

The V pack, which is obtained by compressing the video data by the MPEG-2 scheme, is composed of a pack header, a packet header, and a video data section. The A pack, which is obtained by processing the audio data by, for example, the linear PCM, MPEG, or AC-3 scheme, is composed of a pack header, a packet header, and an audio data section.

The management information is called a video manager (VMG), in which a program chain (PGC) for managing the data reproducing sequence is defined. In the program chain (PGC), a cell (Cell) is defined. In the cell (Cell), video object information (VOBI), information on a video object (VOB) to be reproduced, is defined. The part in which concrete information on a PGC has been recorded is the program chain information (PGCI) part. There are two types of PGCI; one is an original PGCI (ORG_PGCI) and the other is a user defined PGC table (UD_PGCIT). Normally, the original PGCI is created during recording. When a video object managed by the original PGC is edited (deleted, added, or curtailed), the user defined PGCT is created as management information in the form of a play list.

In the VOBI, a time map (TMAP) has been written. The TMAP specifies VOBUs constituting a VOB corresponding to the VOBI. The link of a cell to the VOBI is determined by a logical address. The linking of the TMAP information to a VOB and a VOBU is effected on the basis of the stream number of the VOB, the number of VOBUs in the VOB, the entry number to each VOBU, and a logical address to each target VOBU.

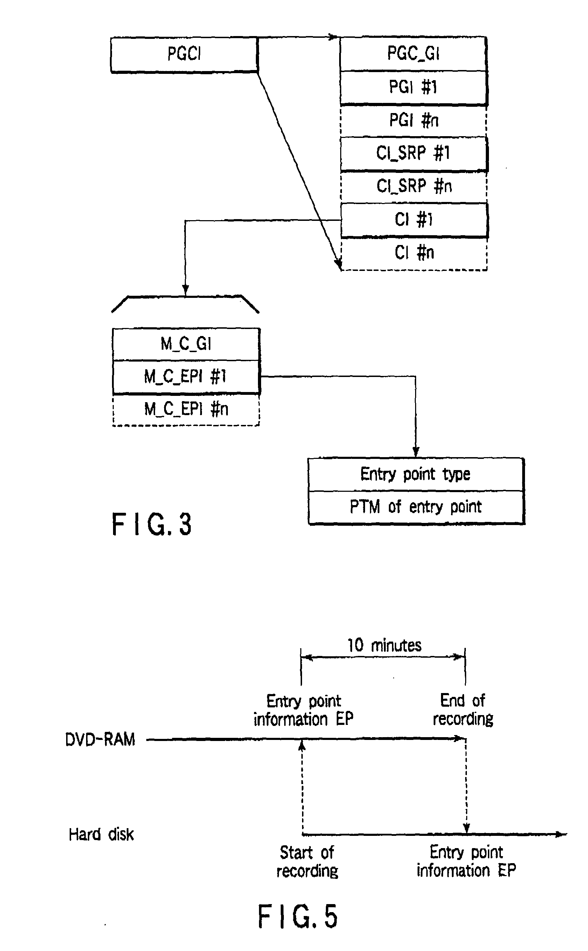

In FIG. 3, the level of hierarchy of PGCI in the management information will be explained.

The program chain information (PGCI) includes program chain general information (PGC_GI), program information PGI, cell information search pointer (CI_SRP), and cell information (CI). In the PGC_GI, the number of programs (PG_Ns) that shows how many programs are to be reproduced by the program chain, and the number of cell search pointers (C_SRP_Ns) that shows how many cell search pointers there are have been written. In the example of FIG. 3, there are program information PGI #1 and PGI #n. There are also cell search pointers C_SRP #1 and C_SRP #n.

The program information PGI includes the type of the program, the number of cells in the program, and representative picture information of the program (the cell number of the representative picture and the picture points in the cell are written using PTM).

In the cell pointer C_SRP, cell general information (movie cell general information meaning moving pictures in the figure) M_C_GI and movie cell entry point information (M_C_EPI) have been written. In the M_C_GI, a cell type that shows whether the cell is of the movie type or the still type, video object information (VOBI) for specifying the VOB determined in the cell, and the number of pieces of cell entry point information C_EPI_Ns that shows how many pieces of cell entry point information there are have been written. In addition, C_V_S_PTM that shows the time when the video corresponding to the cell is started and the time when the reproduction is completed have been written.

As the movie entry point information M_C_EPI, the type of the entry point, the presentation time (PTM) of the entry point have been written.

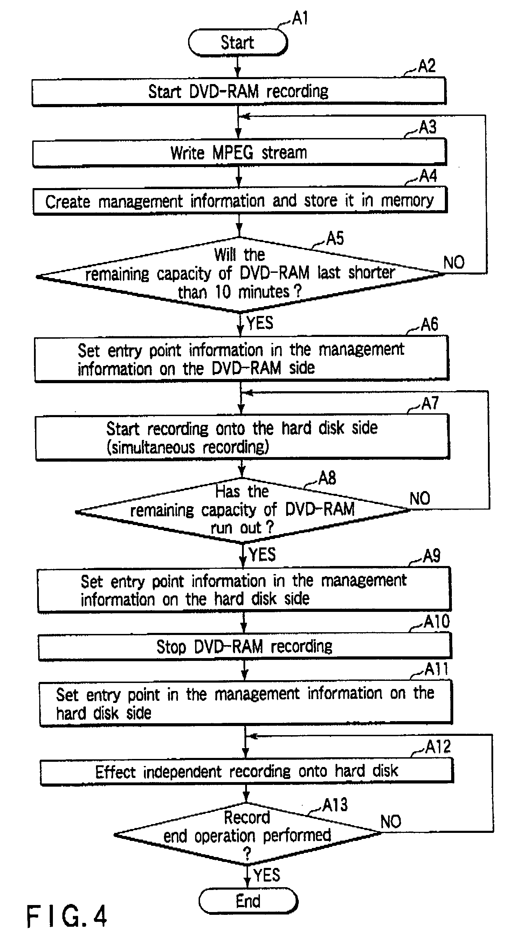

FIG. 4 is a flowchart to help explain the operation when the apparatus of the present invention is used for recording. Recording on a DVD-RAM (or an optical disk 1001) is started. The video information and audio information encoded at the encoder section 50 are formatted at the formatter 51. The resulting information is recorded via the data processor section 1003 and disk drive section 1002 (steps A1, A2, A3). In addition, management information conforming to the DVD standard is created. The management information is stored temporarily in the buffer memory 51 (step A4).

Moreover, it is determined whether the remaining capacity of the memory area of the DVD-RAM can last, for example, shorter than about 10 minutes (step A5). If it can last longer than about 10 minutes, the recording is continued. If it can last shorter than about 10 minutes, the cell entry point information (C_EPI) is set in the management information on the DVD-RAM side (step A6). The cell entry point information (C_EPI) is as explained in FIG. 3. As the PTM of the entry point, the start time (S_PTM) that shows the start of an overlap period is written.

Then, recording on the hard disk is also started. As a result, the same contents are recorded onto both of the DVD-RAM and the hard disk. That is, this is where overlap period recording is started. In the next step A8, it is determined whether there is any remaining capacity in the DVD-RAM. If there is some remaining capacity, the overlap period recording is continued. If there is no remaining capacity, recording onto the DVD-RAM is stopped (step A10). At this time, management information about the DVD-RAM is written on the DVD-RAM. The remaining capacity can be obtained from the information about the file system recorded on the disk. The file system is provided with a space bit map descriptor whereby unrecorded areas are managed. The remaining capacity may be calculated from the number of packs included in the management information. In the DVD, the amount of data in a pack is set to a specific value. Therefore, subtracting the amount of data in as many packs as are recorded into from the total amount of capacity of the disk enables the remaining amount of capacity to be calculated.

Next, the apparatus goes into a state where recording onto the hard disk is effected independently (step A11).

In this case, cell entry pointer information (C_EPI) is also set in the management information on the hard disk side (step A12). The cell entry point information (C_EPI) is as explained in FIG. 3. As for the PTM for the entry point, the end of the overlap period is written as an end time (E_PTM).

Then, if there is a recording end operation (including a recording stop by the timer)(step A13), the recording is stopped.

As a result of the above process, overlap period recording whereby the same contents are recorded onto the DVD-RAM and the hard disk is realized.

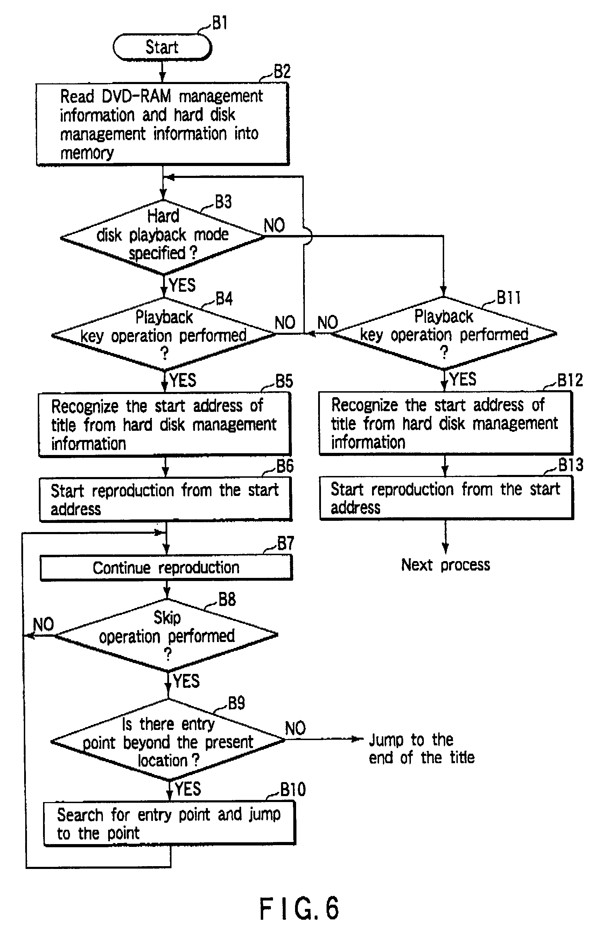

FIG. 5 shows the timing for entry point information to be set to the DVD-RAM, the timing for entry point to be set to the hard disk, and the overlap period in a time chart.

FIG. 6 is a flowchart to help explain the operation when the information recorded on the disk is reproduced.

When the power supply is turned on, the management information on the DVD-RAM side and that on the hard disk side are read and stored in the memory of the microcomputer block 30 (steps B1, B2). Then, it is determined whether the hard disk playback mode has been specified (step B3). If the hard disk playback mode has been specified, it is then determined whether the playback key has been operated (step B4). If it is determined that the playback key has been operated, the microcomputer block 30 recognizes the begin address of the title (VOB) from the hard-disk-side management information (step B5). The microcomputer block 30 causes the disk drive section 1002 to read the signal from the begin address of the title. As a result, the decoder section 60 starts to decode the information read from the begin address (step B6).

Then, the reproduction is continued (step B7). At the same time, it is determined whether there has been a skip operation (step B8). If there has been no skip operation, the reproduction is continued without a break. Thus, during this period, the overlap period information is reproduced.

If there has been a skip operation, it is determined whether there is any entry point information beyond the present location (step B9). If there is entry point information, a jump destination is determined on the basis of the entry point information and a jump is made. In the entry point information, PTM (e.g., PTM1) has been written. In the video pack presently being reproduced, too, PTM (e.g., PTM2) has been written. Therefore, the time difference between them is calculated. In the DVD standard, one physical sector on the disk is defined as one logical sector, which enables the amount of data in one sector to be almost grasped. In addition, the amount of data in one video pack is defined as 2048 bytes. Consequently, it is possible to calculate the amount of data from the time difference and, on the basis of the amount of data, determine an approximate number of sectors to be jumped across. According to the approximate number, the disk drive section 1002 is controlled so as to move close to the entry point and read the information. when there is a video pack having the PTM corresponding to the PTM1, it is the entry point and the data is to be reproduced from there.

In step A9, there is no entry point beyond the present location, the disk drive section 1002 moves to the end of the title. When the apparatus goes from step B3 to the DVD-RAM playback mode, too, it is determined whether there has been a playback key operation (step B11). When the playback key has been operated, the microcomputer block 30 recognizes the begin address of the title from the management information for the DVD-RAM (step B12) and starts to reproduce the information in the begin address (step B13).

As described above, with the apparatus of the present invention, management information about the entry point for the overlap period recording information is recorded. This makes it easier to skip the overlap period recording area on the hard disk side during reproduction. As a result, both of the original object of effecting overlap period recording and a request that the next information should be reproduced, skipping the reproduction in that period, can be satisfied.

The present invention is not limited to the above embodiment. While a DVD-RAM has been used as a first recording medium and a hard disk has been used as a second recording medium, both of the first medium and the second medium may, of course, be DVD-RAMs. The recording media may be a combination of large-capacity semiconductor memory devices.

## Claims

1. A method of recording and reproducing images onto and from a plurality of recording media, in an information recording and reproducing apparatus which access a plurality of the recording media, said method **characterized by** comprising steps of:
recording (A7, A8) overlap period recording information on both of a first recording medium and a second recording medium as information about a concatenating part, when a change is made from the information recording state of said first recording medium to the information recording state of said second recording medium; and
recording (A9 - A11) skip information for skipping said overlap period recording information recorded on said second recording medium in playback management information recorded at least on said second recording medium.

2. The method of recording and reproducing images on a plurality of recording media according to claim 1, **characterized in that** said skip information recording step including step of:
recording entry point information indicating the start position of said overlap period recording information in the playback management information on said first recording medium, and recording entry point information indicating the end position of said overlap period recording information in the playback management information on said second recording medium.

3. The method of recording and reproducing images on a plurality of recording media according to claim 2, **characterized in that** said first recording medium is an optical disk removable with respect to said information recording and reproducing apparatus and said second recording medium is a hard disk built into said information recording and reproducing apparatus.

4. An apparatus for recording and reproducing images on a plurality of recording media in an information recording and reproducing apparatus which accesses a plurality of recording media at the same time, said apparatus **characterized by** comprising:
means (30, A7) for recording overlap period recording information on both of a first recording medium and a second recording medium as information about a concatenating part, when a change is made from the information recording state of said first recording medium to the information recording state of said second recording medium; and
means (30, A9) for recording skip information for skipping said overlap period recording information recorded on said second recording medium in playback management information recorded at least on said second recording medium.

5. The apparatus for recording and reproducing images on a plurality of recording media according to claim 4, **characterized by** further comprising, means (30, A6) for recording entry point information indicating the start position of said overlap period recording information in the playback management information on said first recording medium; and means (30, A11) for recording entry point information indicating the end position of said overlap period recording information in the playback management information on said second recording medium.

6. The apparatus for recording and reproducing images on a plurality of recording media according to claim 5, **characterized in that** said first recording medium is an optical disk (1001) removable with respect to said information recording and reproducing apparatus and said second recording medium is a hard disk (2001) built into said information recording and reproducing apparatus.
